# EUROPEAN PATENT APPLICATION

(11) **EP 3 952 104 A1**
(43) Date of publication of application: **09.02.2022**
(21) Application number: 19920711.9
(22) Date of filing: 28.03.2019
(51) Int. Cl.: H02P 27/08

(54) **MOTOR DRIVE DEVICE, VACUUM CLEANER, AND HAND DRYER**

(71) Applicant: MITSUBISHI ELECTRIC CORPORATION, Chiyoda-ku Tokyo 100-8310 (JP)
(72) Inventor: HATAKEYAMA, Kazunori, Tokyo 100-8310 (JP); TAKAYAMA, Yuji, Tokyo 100-8310 (JP); MATSUO, Haruka, Tokyo 100-8310 (JP)
(74) Representative: Mewburn Ellis LLP
(86) International application number: PCT/JP2019/013890
(87) International publication number: WO 2020/194754

(57) **Abstract**

A motor driving apparatus (2) includes: an inverter (11) including a leg (5A) and a leg (5B) connected in parallel to a battery (10), the leg (5A) including switching elements (51, 52) connected in series to each other, the leg (5B) including switching elements (53, 54) connected in series to each other, and the inverter (11) converting a direct-current power supplied from the battery (10), into an alternating-current power; a shunt resistor (55) disposed on a path between the inverter (11) and the battery (10); and a control unit (25) controlling, in a case of using a two-sided PWM mode, the switching elements (51 to 54) such that current flows in the shunt resistor (55) within a time period between a first timing at which one switching element of a pair of switching elements is turned on and a second timing at which the other switching element of that pair is turned on, the pair of switching elements having a smaller one of a total value of individual on-times of a pair of the switching elements (51, 54) and a total value of individual on-times of a pair of the switching elements (52, 53).

## Description

### Field

The present invention relates to a motor driving apparatus for driving a single-phase motor, and to a vacuum cleaner and a hand drying machine including the same.

### Background

Prior art discloses that an inverter for driving a single-phase motor includes a shunt resistor as a current detection means. Such a shunt resistor is provided as a current detection unit between a negative terminal of a direct-current power supply and the connection point on the low potential side between lower switching elements of two legs of the inverter in order to detect the motor current flowing from the inverter to the single-phase motor. This configuration is called a "single shunt system".

### Citation List

### Patent Literature

Patent Literature 1: Japanese Patent Application Laid-open No. 2017-200433

### Summary

### Technical Problem

For the conventional general pulse width modulation (PWM) control, analog-to-digital (AD) conversion for current detection is often performed in synchronization with a peak or trough of the carrier. For PWM control performed on the switching elements of the inverter for driving the single-phase motor, the switching pattern that turns on the upper switching elements of the two legs or the lower switching elements of the two legs simultaneously occurs at a peak or trough of the carrier. The single shunt system fails to carry currents through the shunt resistor in this switching pattern. To detect the current detection under the conventional concept, thus, the single shunt system is required to change the current detection timing in accordance with the switching pattern of PWM control, which leads to the problem of complicated control.

As described above, the concept of the conventional method is premised on the PWM control under which the current is detected, resulting in complicated timing control for current detection. Therefore, there has been a demand for a motor driving apparatus that uses a detection method with which timing control for current detection can be easily performed without complication.

The present invention has been made in view of the above, and an object thereof is to obtain a motor driving apparatus that can easily perform timing control for current detection without complication.

### Solution to Problem

In order to solve the above-mentioned problems and achieve the object, a motor driving apparatus according to the present invention includes an inverter, a current detector, and a control unit. The inverter includes a first leg and a second leg, the first leg including a first switching element of an upper arm and a second switching element of a lower arm connected in series to each other, the second leg including a third switching element of the upper arm and a fourth switching element of the lower arm connected in series to each other. The first leg and the second leg are connected in parallel to a direct-current power supply. The inverter converts a direct-current power supplied from the direct-current power supply, into an alternating-current power and supplies the alternating-current power to a single-phase motor. The current detector is disposed on a path between the inverter and the direct-current power supply. The control unit controls, in a case of using a two-sided pulse width modulation mode, the first to fourth switching elements such that current flows through the current detector within a time period between a first timing at which one switching element of a pair of switching elements is turned on and a second timing at which the other switching element of that pair is turned on, the pair of switching elements having a smaller one of a total value of individual on-times of a pair of the first switching element and the fourth switching element and a total value of individual on-times of a pair of the second switching element and the third switching element.

### Advantageous Effects of Invention

The motor driving apparatus according to the present invention can achieve the effect of easily performing timing control for current detection without complication.

### Brief Description of Drawings

FIG. 1 is a diagram illustrating the configuration of a motor driving system including a motor driving apparatus according to an embodiment.
FIG. 2 is a circuit diagram illustrating the inverter illustrated in FIG. 1.
FIG. 3 is a block diagram illustrating a functional part that generates PWM signals among the functional parts of the control unit illustrated in FIG. 1.
FIG. 4 is a block diagram illustrating an example of the carrier comparison unit illustrated in FIG. 3.
FIG. 5 is a time chart illustrating examples of the main waveforms in the carrier comparison unit illustrated in FIG. 4.
FIG. 6 is a block diagram illustrating another example of the carrier comparison unit illustrated in FIG. 3.
FIG. 7 is a time chart illustrating examples of the main waveforms in the carrier comparison unit illustrated in FIG. 6.
FIG. 8 is a block diagram illustrating a functional configuration for calculating a lead angle phase that is input to the carrier comparison units illustrated in FIGS. 4 and 6.
FIG. 9 is a diagram illustrating an exemplary method for calculating a lead angle phase according to an embodiment.
FIG. 10 is a time chart used to explain the relationship between the voltage command and the lead angle phase illustrated in FIGS. 4 and 6.
FIG. 11 is a diagram of FIG. 2 illustrating one of the current paths through which power is supplied from the battery to the single-phase motor.
FIG. 12 is a diagram of FIG. 2 illustrating another one of the current paths through which power is supplied from the battery to the single-phase motor.
FIG. 13 is a diagram of FIG. 2 illustrating one of the current paths for the flywheel operation of the inverter.
FIG. 14 is a diagram of FIG. 2 illustrating another one of the current paths for the flywheel operation of the inverter.
FIG. 15 is a diagram based on FIG. 2 illustrating one of the current paths through which the regenerative energy of the single-phase motor is supplied to the battery.
FIG. 16 is a diagram based on FIG. 2 illustrating another one of the current paths through which the regenerative energy of the single-phase motor is supplied to the battery.
FIG. 17 is a diagram illustrating an exemplary configuration of the current detection unit illustrated in FIG. 1.
FIG. 18 is a diagram illustrating various waveforms in the two-sided PWM mode used for explaining operation according to an embodiment.
FIG. 19 is a partially enlarged diagram of the waveforms illustrated in FIG. 18.
FIG. 20 is a diagram illustrating various waveforms in the one-sided PWM mode used for explaining operation according to an embodiment.
FIG. 21 is a partially enlarged diagram of the waveforms illustrated in FIG. 20.
FIG. 22 is a flowchart illustrating a current detection switching operation according to an embodiment.
FIG. 23 is a diagram illustrating the configuration of a vacuum cleaner including a motor driving apparatus according to an embodiment.
FIG. 24 is a diagram illustrating the configuration of a hand drying machine including a motor driving apparatus according to an embodiment.

### Description of Embodiments

Hereinafter, a motor driving apparatus, a vacuum cleaner, and a hand drying machine according to an embodiment of the present invention will be described in detail with reference to the accompanying drawings. The present invention is not limited to the following embodiment. In the following description, electrical connection and physical connection are not distinguished, and are simply referred to as "connection".

### Embodiment

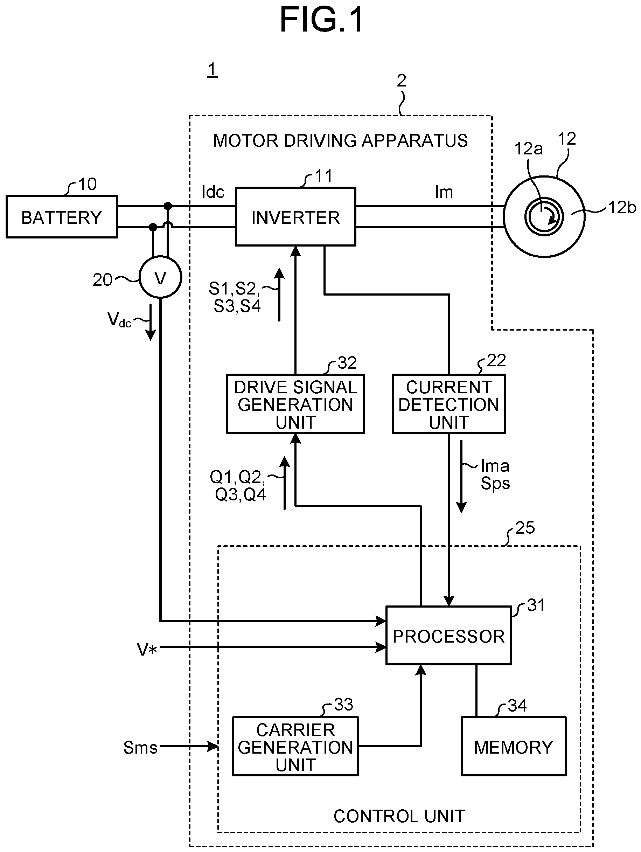

FIG. 1 is a diagram illustrating the configuration of a motor driving system 1 including a motor driving apparatus 2 according to an embodiment. The motor driving system 1 illustrated in FIG. 1 includes a single-phase motor 12, the motor driving apparatus 2, a battery 10, and a voltage sensor 20.

The motor driving apparatus 2 supplies alternating-current power to the single-phase motor 12 to drive the single-phase motor 12. The battery 10 is a direct-current power supply that supplies direct-current power to the motor driving apparatus 2. The voltage sensor 20 detects a direct-current voltage V_{dc} output from the battery 10 to the motor driving apparatus 2.

The single-phase motor 12 is used as a rotary electric machine for rotating an electric blower (not illustrated). The single-phase motor 12 and the electric blower are installed on devices such as vacuum cleaners and hand drying machines.

In the present embodiment, the voltage sensor 20 detects the direct-current voltage V_{dc}, but the detection target of the voltage sensor 20 is not limited to the direct-current voltage V_{dc} output from the battery 10. The detection target of the voltage sensor 20 may be inverter output voltage, i.e. alternating-current voltage output from an inverter 11. The "inverter output voltage" is the output voltage of the motor driving apparatus 2, and is synonymous with the "motor applied voltage" described later.

The motor driving apparatus 2 includes the inverter 11, a current detection unit 22, a control unit 25, and a drive signal generation unit 32. The inverter 11 drives the single-phase motor 12 by converting the direct-current power supplied from the battery 10 into alternating-current power and supplying the alternating-current power to the single-phase motor 12. Note that the inverter 11 is exemplified by a single-phase inverter, but may be any that is capable of driving the single-phase motor 12. In addition, although not illustrated in FIG. 1, a capacitor for voltage stabilization may be inserted between the battery 10 and the inverter 11.

The current detection unit 22 generates and outputs a current signal Ima for restoring a motor current Im, and a protection signal Sps. Although the current signal Ima is described as a current signal, a voltage signal having a voltage value obtained through conversion may be used.

The control unit 25 receives input of a voltage amplitude command V*, the direct-current voltage V_{dc} detected by the voltage sensor 20, the current signal Ima detected by the current detection unit 22, the protection signal Sps, and an operation mode signal Sms. The voltage amplitude command V* is an amplitude value of a voltage command Vₘ described later. The control unit 25 generates PWM signals Q1, Q2, Q3, and Q4 (hereinafter denoted by "Q1 to Q4") on the basis of the voltage amplitude command V* and the direct-current voltage V_{dc}. The inverter output voltage is controlled by the PWM signals Q1 to Q4, and the desired voltage is applied to the single-phase motor 12. In addition, the control unit 25 generates, on the basis of the protection signal Sps, the PWM signals Q1 to Q4 for stopping the operation of the switching elements of the inverter 11. The PWM signals Q1 to Q4 cause the inverter 11 to stop operating, and the power supply to the single-phase motor 12 is cut off. In addition, the control unit 25 switches the operation mode of the control unit 25 on the basis of the operation mode signal Sms. Note that details of the operation mode switching will be described later.

The drive signal generation unit 32 converts the PWM signals Q1 to Q4 output from the control unit 25, into drive signals S1, S2, S3, and S4 for driving the inverter 11, and outputs the drive signals S1, S2, S3, and S4 to the inverter 11.

The control unit 25 includes a processor 31, a carrier generation unit 33, and a memory 34. The processor 31 generates the above-mentioned PWM signals Q1 to Q4. The processor 31 performs computation processing related to lead angle control in addition to computation processing related to PWM control. A function of each of a carrier comparison unit 38, a rotation speed calculation unit 42, and a lead angle phase calculation unit 44, which will be described later, is implemented by the processor 31. The processor 31 may be what is called a central processing unit (CPU), a microprocessor, a microcontroller, a microcomputer, or a digital signal processor (DSP).

The memory 34 stores a program that is read by the processor 31. The memory 34 is used as a work area when the processor 31 performs computation processing. The memory 34 is typically a non-volatile or volatile semiconductor memory such as a random access memory (RAM), a flash memory, an erasable programmable ROM (EPROM), or an electrically EPROM (EEPROM, registered trademark). Details of the configuration of the carrier generation unit 33 will be described later.

An example of the single-phase motor 12 is a brushless motor. In the case where the single-phase motor 12 is a brushless motor, a plurality of permanent magnets (not illustrated) are arranged in the circumferential direction on a rotor 12a of the single-phase motor 12. These plurality of permanent magnets are disposed such that the magnetizing directions are alternately reversed in the circumferential direction, and form a plurality of magnetic poles on the rotor 12a. A winding (not illustrated) is wound around a stator 12b of the single-phase motor 12. The motor current flows through the winding. Note that the present embodiment is based on the assumption that the number of magnetic poles of the rotor 12a is four, but the number of magnetic poles may be other than four.

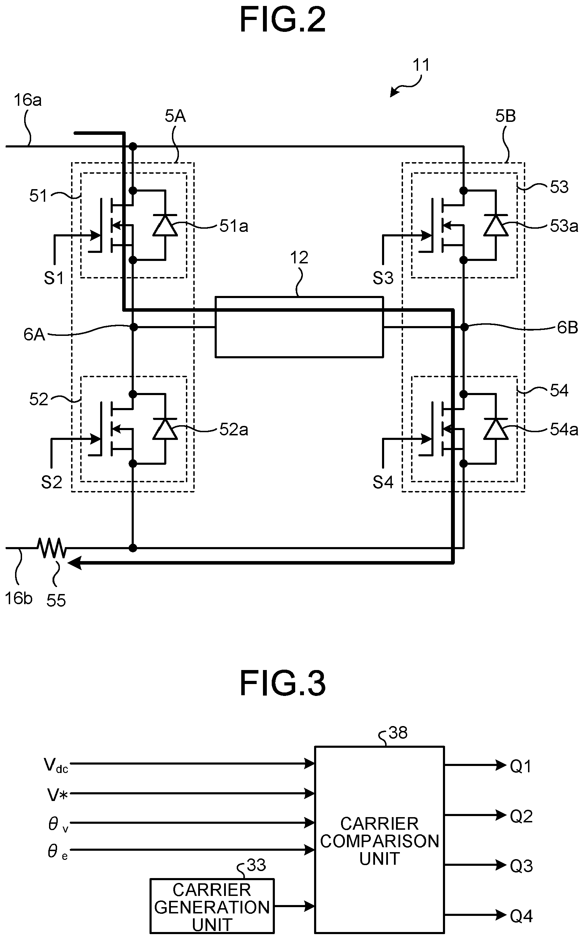

FIG. 2 is a circuit diagram illustrating the inverter 11 illustrated in FIG. 1. The inverter 11 includes a plurality of switching elements 51, 52, 53, and 54 (hereinafter denoted by "51 to 54") that are bridge-connected.

The switching elements 51 and 52 constitute a leg 5A, which is the first leg. The leg 5A is a series circuit in which the switching element 51, which is the first switching element, and the switching element 52, which is the second switching element, are connected in series to each other.

The switching elements 53 and 54 constitute a leg 5B, which is the second leg. The leg 5B is a series circuit in which the switching element 53, which is the third switching element, and the switching element 54, which is the fourth switching element, are connected in series to each other.

The legs 5A and 5B are connected in parallel to each other between a direct-current bus 16a on the high potential side and a direct-current bus 16b on the low potential side. Thus, the legs 5A and 5B are connected in parallel to the two ends of the battery 10.

The switching elements 51 and 53 are located on the high potential side, and the switching elements 52 and 54 are located on the low potential side. Generally, in an inverter circuit, the high potential side is referred to as an "upper arm" and the low potential side is referred to as a "lower arm". Thus, the switching element 51 of the leg 5A may be referred to as the "first switching element of the upper arm", and the switching element 52 of the leg 5A may be referred to as the "second switching element of the lower arm". Similarly, the switching element 53 of the leg 5B may be referred to as the "third switching element of the upper arm", and the switching element 54 of the leg 5B may be referred to as the "fourth switching element of the lower arm".

A connection point 6A between the switching element 51 and the switching element 52 and a connection point 6B between the switching element 53 and the switching element 54 constitute an alternating-current end of the bridge circuit. The single-phase motor 12 is connected between the connection point 6A and the connection point 6B.

An example of each of the switching elements 51 to 54 is a metal-oxide-semiconductor field-effect transistor (MOSFET). A MOSFET is an example of a field-effect transistor (FET).

In the switching element 51, a body diode 51a connected in parallel between the drain and source of the switching element 51 is formed. In the switching element 52, a body diode 52a connected in parallel between the drain and source of the switching element 52 is formed. In the switching element 53, a body diode 53a connected in parallel between the drain and source of the switching element 53 is formed. In the switching element 54, a body diode 54a connected in parallel between the drain and source of the switching element 54 is formed. Each of the plurality of body diodes 51a, 52a, 53a, and 54a is a parasitic diode formed inside the MOSFET, and is used as a freewheeling diode. Note that a separate freewheeling diode may be connected. Instead of MOSFETs, insulated gate bipolar transistors (IGBTs) may be used.

The switching elements 51 to 54 are not limited to MOSFETs formed of a silicon-based material, but may be MOSFETs formed of a wide bandgap (WBG) semiconductor such as silicon carbide, gallium nitride, gallium oxide, or diamond.

In general, WBG semiconductors have higher withstand voltage and heat resistance than silicon semiconductors. Therefore, by using WBG semiconductors for the plurality of switching elements 51 to 54, the withstand voltage property and allowable current density of the switching elements are increased, which can contribute to reducing the size of the semiconductor module incorporating the switching elements. In addition, the high heat resistance of WBG semiconductors can contribute to reducing the size of the heat dissipation part for dissipating heat generated by the semiconductor module, and to simplifying the heat dissipation structure that dissipates heat generated by the semiconductor module.

In FIG. 2, a shunt resistor 55 is inserted in the direct-current bus 16b on the low potential side. The shunt resistor 55 is disposed on the path between the inverter 11 and the battery 10 (not illustrated in FIG. 2). The shunt resistor 55 is a detector for detecting the current flowing between the inverter 11 and the battery 10. The shunt resistor 55 and the current detection unit 22 constitute a "current detection means". The shunt resistor 55 constitutes a "current detector" in the current detection unit.

Note that the shunt resistor 55 is not limited to that illustrated in FIG. 2 as long as it can detect the current flowing between the inverter 11 and the battery 10. The shunt resistor 55 may be one that is inserted in the direct-current bus 16a.

FIG. 3 is a block diagram illustrating a functional part that generates PWM signals among the functional parts of the control unit 25 illustrated in FIG. 1.

In FIG. 3, the carrier comparison unit 38 receives input of a lead angle phase θᵥ under lead angle control and a reference phase θₑ, which are used for generating the voltage command Vₘ as described later. The reference phase θₑ is a phase obtained by converting a rotor mechanical angle θₘ, i.e. an angle from the reference position of the rotor 12a, into an electric angle. Note that the motor driving apparatus according to the present embodiment has what is called a position sensorless drive configuration, in which position sensor signals from a position sensor are not used. Thus, the rotor mechanical angle θₘ and the reference phase θₑ are estimated by computation. The "lead angle phase" as used herein represents the "lead angle" of the voltage command in phase. Further, the "lead angle" as used herein is the phase difference between the motor-applied voltage applied to the winding of the stator 12b and the motor-induced voltage induced in the winding of the stator 12b. Note that the "lead angle" takes a positive value when the motor applied voltage has its phase leading a phase of the motor induced voltage.

In addition to the lead angle phase θᵥ and the reference phase θₑ, the carrier comparison unit 38 receives input of the carrier generated by the carrier generation unit 33, the direct-current voltage V_{dc}, and the voltage amplitude command V*. The voltage amplitude command V* is the amplitude value of the voltage command Vₘ. The carrier comparison unit 38 generates the PWM signals Q1 to Q4 on the basis of the carrier, the lead angle phase θᵥ, the reference phase θₑ, the direct-current voltage V_{dc}, and the voltage amplitude command V*.

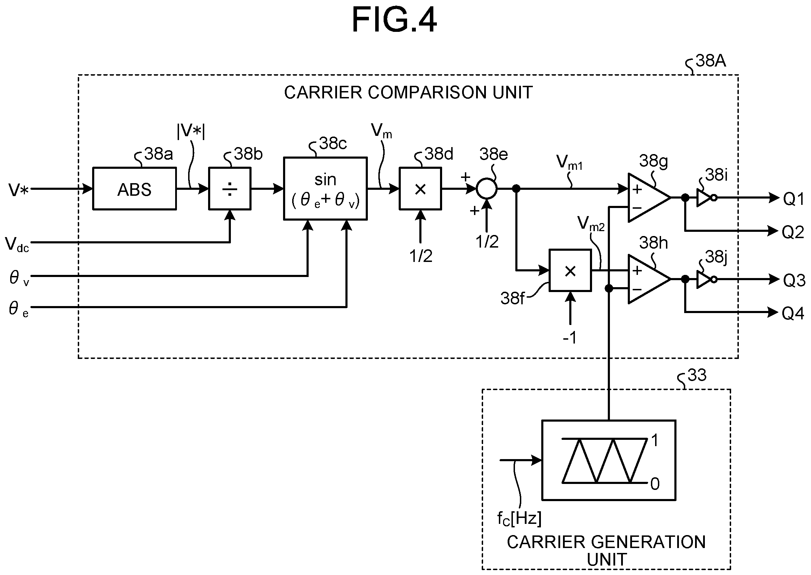

FIG. 4 is a block diagram illustrating an example of the carrier comparison unit 38 illustrated in FIG. 3. FIG. 4 depicts the detailed configuration of the carrier comparison unit 38A and the carrier generation unit 33.

In FIG. 4, a carrier frequency f_{c} [Hz], which is the frequency of the carrier, is set in the carrier generation unit 33. As indicated by the arrow of the carrier frequency f_{c}, a triangular wave carrier that moves up and down between "0" and "1" is illustrated as an example of the carrier waveform. The PWM control of the inverter 11 includes synchronous PWM control and asynchronous PWM control. In the case of synchronous PWM control, it is necessary to synchronize the carrier with the lead angle phase θᵥ. On the other hand, in the case of asynchronous PWM control, it is not necessary to synchronize the carrier with the lead angle phase θᵥ.

As illustrated in FIG. 4, the carrier comparison unit 38A includes an absolute value computation unit 38a, a division unit 38b, a multiplication unit 38c, a multiplication unit 38d, a multiplication unit 38f, an addition unit 38e, a comparison unit 38g, a comparison unit 38h, an output inversion unit 38i, and an output inversion unit 38j.

The absolute value computation unit 38a computes an absolute value |V*| of the voltage amplitude command V*. The division unit 38b divides the absolute value |V*| by the direct-current voltage V_{dc} detected by the voltage sensor 20. In the configuration of FIG. 4, the output of the division unit 38b is used as the modulation factor. Battery voltage, which is the output voltage of the battery 10, fluctuates due to a continuous flow of current. However, dividing the absolute value |V*| by the direct-current voltage V_{dc} enables the value of the modulation factor to be adjusted so that the motor applied voltage does not decrease due to a decrease in battery voltage.

The multiplication unit 38c computes the sine value of "θₑ+θᵥ", i.e. the reference phase θₑ plus the lead angle phase θᵥ. The computed sine value of "θₑ+θᵥ" is multiplied by the modulation factor that is the output of the division unit 38b. The multiplication unit 38d multiplies the voltage command Vₘ, which is the output of the multiplication unit 38c, by "1/2". The addition unit 38e adds "1/2" to the output of the multiplication unit 38d. The multiplication unit 38f multiplies the output of the addition unit 38e by "-1". Also, the output of the addition unit 38e is input to the comparison unit 38g as a positive voltage command Vₘ₁ for driving the two switching elements 51 and 53 of the upper arm among the plurality of switching elements 51 to 54. The output of the multiplication unit 38f is input to the comparison unit 38h as a negative voltage command Vₘ₂ for driving the two switching elements 52 and 54 of the lower arm.

The comparison unit 38g compares the positive voltage command Vₘ₁ with the amplitude of the carrier. The output of the output inversion unit 38i, which is the inverted output of the comparison unit 38g, serves as the PWM signal Q1 for the switching element 51, and the output of the comparison unit 38g serves as the PWM signal Q2 for the switching element 52. Similarly, the comparison unit 38h compares the negative voltage command Vₘ₂ with the amplitude of the carrier. The output of the output inversion unit 38j, which is the inverted output of the comparison unit 38h, serves as the PWM signal Q3 for the switching element 53, and the output of the comparison unit 38h serves as the PWM signal Q4 for the switching element 54. The output inversion unit 38i ensures that the switching element 51 and the switching element 52 are not on at the same time, and the output inversion unit 38j ensures that the switching element 53 and the switching element 54 are not on at the same time.

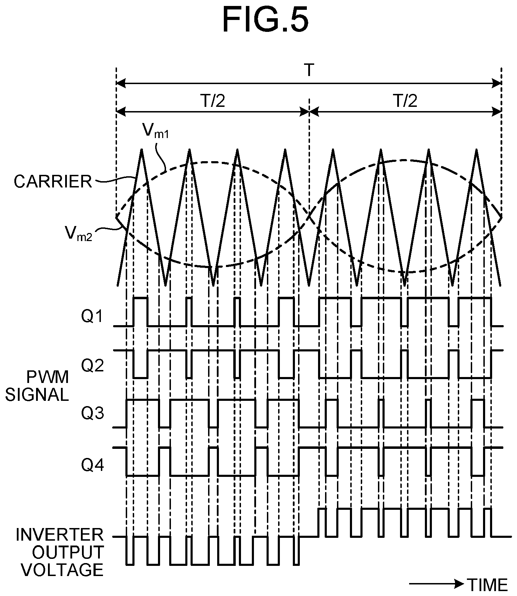

FIG. 5 is a time chart illustrating examples of the main waveforms in the carrier comparison unit 38A illustrated in FIG. 4. FIG. 5 depicts the waveform of the positive voltage command Vₘ₁ output from the addition unit 38e, the waveform of the negative voltage command Vₘ₂ output from the multiplication unit 38f, the waveforms of the PWM signals Q1 to Q4, and the waveform of the inverter output voltage.

The PWM signal Q1 is "Low" when the positive voltage command Vₘ₁ is larger than the carrier, and "High" when the positive voltage command Vₘ₁ is smaller than the carrier. The PWM signal Q2 is the inverted signal of the PWM signal Q1. The PWM signal Q3 is "Low" when the negative voltage command Vₘ₂ is larger than the carrier, and "High" when the negative voltage command Vₘ₂ is smaller than the carrier. The PWM signal Q4 is the inverted signal of the PWM signal Q3. In this way, the circuit illustrated in FIG. 4 is configured as "Low Active", but may be configured as "High Active", in which each signal has the opposite value.

As illustrated in FIG. 5, the waveform of the inverter output voltage contains voltage pulses due to the difference voltage between the PWM signal Q1 and the PWM signal Q4 and voltage pulses due to the difference voltage between the PWM signal Q3 and the PWM signal Q2. These voltage pulses are applied to the single-phase motor 12 as the motor applied voltage.

Known modulation methods used in generating the PWM signals Q1 to Q4 include bipolar modulation and unipolar modulation. Bipolar modulation is a modulation method for outputting voltage pulses that switch to a positive or negative potential for each period of the voltage command Vₘ. Unipolar modulation is a modulation method for outputting voltage pulses that switch between three potentials for each period of the voltage command Vₘ, that is, voltage pulses that switch between a positive potential, a negative potential, and zero potential. The waveforms illustrated in FIG. 5 are produced by unipolar modulation. The motor driving apparatus 2 according to the present embodiment may use either modulation method. In applications that requires control for providing the motor current waveform closer to a sinusoidal wave, it is preferable to employ unipolar modulation, which has a lower harmonic content than bipolar modulation.

The waveforms illustrated in FIG. 5 are obtained with a method in which the four switching elements of the switching elements 51 and 52 constituting the leg 5A and the switching elements 53 and 54 constituting the leg 5B are subjected to switching operation during the time period of a half cycle T/2 of the voltage command Vₘ. This method is called "two-sided PWM" because switching operation is performed with both the positive voltage command Vₘ₁ and the negative voltage command Vₘ₂. There is another method called "one-sided PWM" in contrast to the "two-sided PWM". For the "one-sided PWM", the switching operation of the switching elements 51 and 52 is suspended in one half of one period T of the voltage command Vₘ, and the switching operation of the switching elements 53 and 54 is suspended in the other half of the one period T of the voltage command Vₘ. The "one-sided PWM" will be described hereinafter. In the following description, the operation mode in which two-sided PWM is used for operation is referred to as "two-sided PWM mode", and the operation mode in which one-sided PWM is used for operation is referred to as "one-sided PWM mode".

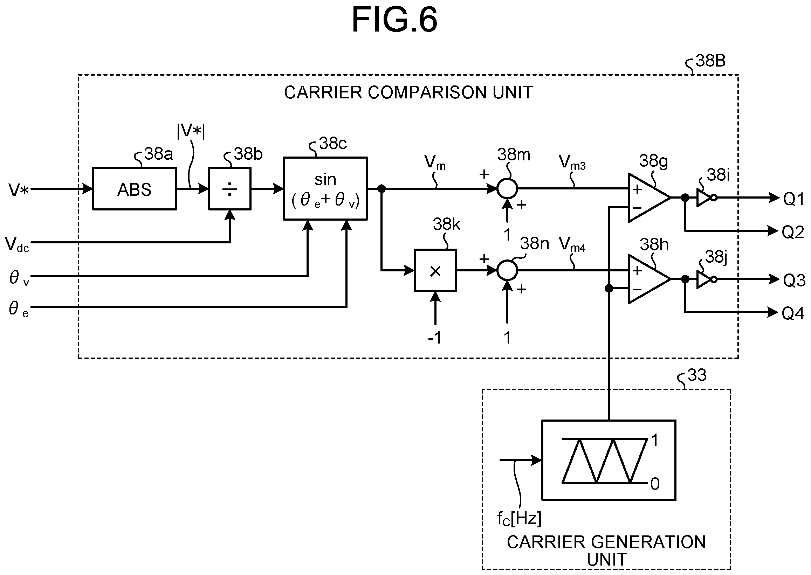

FIG. 6 is a block diagram illustrating another example of the carrier comparison unit 38 illustrated in FIG. 3. FIG. 6 depicts an example of the PWM signal generation circuit produced by the above-mentioned "one-sided PWM". Specifically, FIG. 6 depicts the detailed configuration of a carrier comparison unit 38B and the carrier generation unit 33. Note that the configuration of the carrier generation unit 33 illustrated in FIG. 6 is the same as or equivalent to that illustrated in FIG. 4. Components in the configuration of the carrier comparison unit 38B illustrated in FIG. 6 that are the same as or equivalent to those of the carrier comparison unit 38A illustrated in FIG. 4 are denoted by the same reference signs.

As illustrated in FIG. 6, the carrier comparison unit 38B includes the absolute value computation unit 38a, the division unit 38b, the multiplication unit 38c, a multiplication unit 38k, an addition unit 38m, an addition unit 38n, the comparison unit 38g, the comparison unit 38h, the output inversion unit 38i, and the output inversion unit 38j.

The absolute value computation unit 38a computes the absolute value |V*| of the voltage amplitude command V*. The division unit 38b divides the absolute value |V*| by the direct-current voltage V_{dc} detected by the voltage sensor 20. The output of the division unit 38b is used as the modulation factor also in the configuration of FIG. 6.

The multiplication unit 38c computes the sine value of "θₑ+θᵥ", i.e. the reference phase θₑ plus the lead angle phase θᵥ. The computed sine value of "θₑ+θᵥ" is multiplied by the modulation factor that is the output of the division unit 38b. The multiplication unit 38k multiplies the voltage command Vₘ, which is the output of the multiplication unit 38c, by "-1". The addition unit 38m adds "1" to the voltage command Vₘ that is the output of the multiplication unit 38c. The addition unit 38n adds "1" to the output of the multiplication unit 38k, that is, the inverted output of the voltage command Vₘ. The output of the addition unit 38m is input to the comparison unit 38g as a first voltage command Vₘ₃ for driving the two switching elements 51 and 53 of the upper arm among the plurality of switching elements 51 to 54. The output of the addition unit 38n is input to the comparison unit 38h as a second voltage command Vₘ₄ for driving the two switching elements 52 and 54 of the lower arm.

The comparison unit 38g compares the first voltage command Vₘ₃ with the amplitude of the carrier are compared. The output of the output inversion unit 38i, which is the inverted output of the comparison unit 38g, serves as the PWM signal Q1 for the switching element 51, and the output of the comparison unit 38g serves as the PWM signal Q2 for the switching element 52. Similarly, the comparison unit 38h compares the second voltage command Vₘ₄ with the amplitude of the carrier. The output of the output inversion unit 38j, which is the inverted output of the comparison unit 38h, serves as the PWM signal Q3 for the switching element 53, and the output of the comparison unit 38h serves as the PWM signal Q4 for the switching element 54. The output inversion unit 38i ensures that the switching element 51 and the switching element 52 are not on at the same time, and the output inversion unit 38j ensures that the switching element 53 and the switching element 54 are not on at the same time.

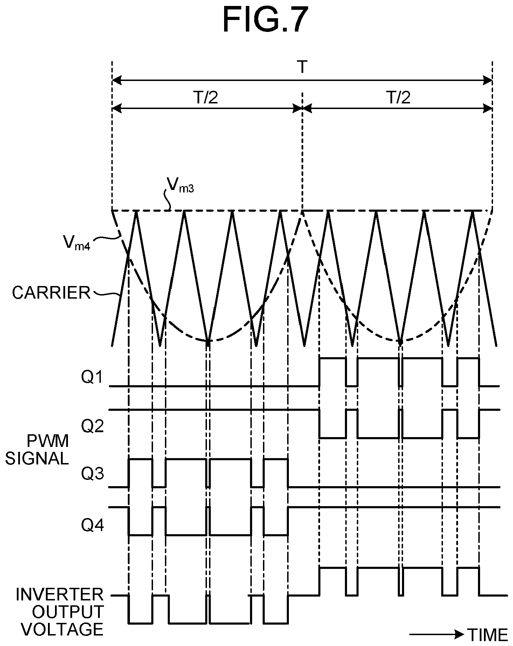

FIG. 7 is a time chart illustrating examples of the main waveforms in the carrier comparison unit 38B illustrated in FIG. 6. FIG. 7 depicts the waveform of the first voltage command Vₘ₃ output from the addition unit 38m, the waveform of the second voltage command Vₘ₄ output from the addition unit 38n, the waveforms of the PWM signals Q1 to Q4, and the waveform of the inverter output voltage. In FIG. 7, for convenience, the waveform portion of the first voltage command Vₘ₃ having amplitude values larger than the peak value of the carrier and the waveform portion of the second voltage command Vₘ₄ having amplitude values larger than the peak value of the carrier are represented by flat straight lines.

The PWM signal Q1 is "Low" when the first voltage command Vₘ₃ is larger than the carrier, and "High" when the first voltage command Vₘ₃ is smaller than the carrier. The PWM signal Q2 is the inverted signal of the PWM signal Q1. The PWM signal Q3 is "Low" when the second voltage command Vₘ₄ is larger than the carrier, and "High" when the second voltage command Vₘ₄ is smaller than the carrier. The PWM signal Q4 is the inverted signal of the PWM signal Q3. In this way, the circuit illustrated in FIG. 6 is configured as "Low Active", but may be configured as "High Active", in which each signal has the opposite value.

As illustrated in FIG. 7, the waveform of the inverter output voltage contains voltage pulses due to the difference voltage between the PWM signal Q1 and the PWM signal Q4 and voltage pulses due to the difference voltage between the PWM signal Q3 and the PWM signal Q2. These voltage pulses are applied to the single-phase motor 12 as the motor applied voltage.

The waveforms illustrated in FIG. 7 show that the switching operation of the switching elements 51 and 52 is suspended in one half of the one period T of the voltage command Vₘ, and the switching operation of the switching elements 53 and 54 is suspended in the other half of the one period T of the voltage command Vₘ.

The waveforms illustrated in FIG. 7 also show that the switching element 52 is controlled such that the switching element 52 is always in an on state in one half of the one period T of the voltage command Vₘ, and the switching element 54 is controlled such that the switching element 54 is always in an on state in the other half of the one period T of the voltage command Vₘ. Note that FIG. 7 is an example, and it is also possible that the switching element 51 is controlled such that the switching element 51 is always in an on state in one half of the period, and the switching element 53 is controlled such that the switching element 53 is always in an on state in the other half of the period. That is, the waveforms illustrated in FIG. 7 are characterized in that at least one of the switching elements 51 to 54 is controlled such that the at least one switching element is in an on state in half a period of the voltage command Vₘ.

In FIG. 7, the waveform of the inverter output voltage is a result of unipolar modulation, in which the waveform switches between three potentials for each period of the voltage command Vₘ. As described above, bipolar modulation may be used instead of unipolar modulation, but it is preferable to employ unipolar modulation in applications that require control for providing the motor current waveform closer to a sinusoidal wave.

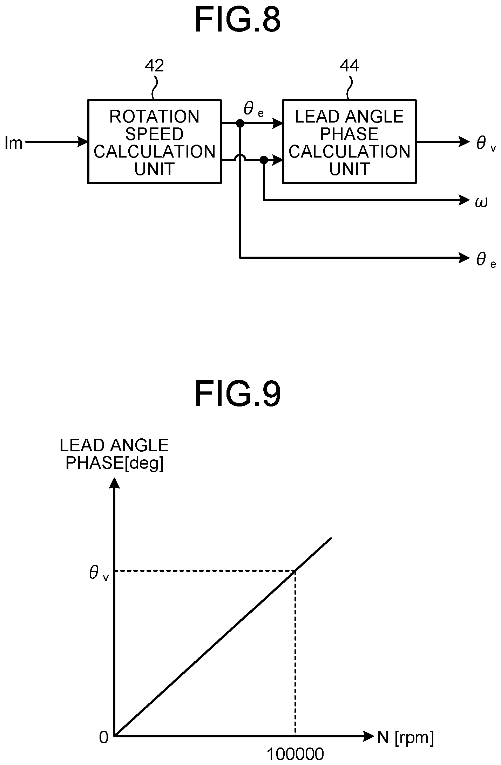

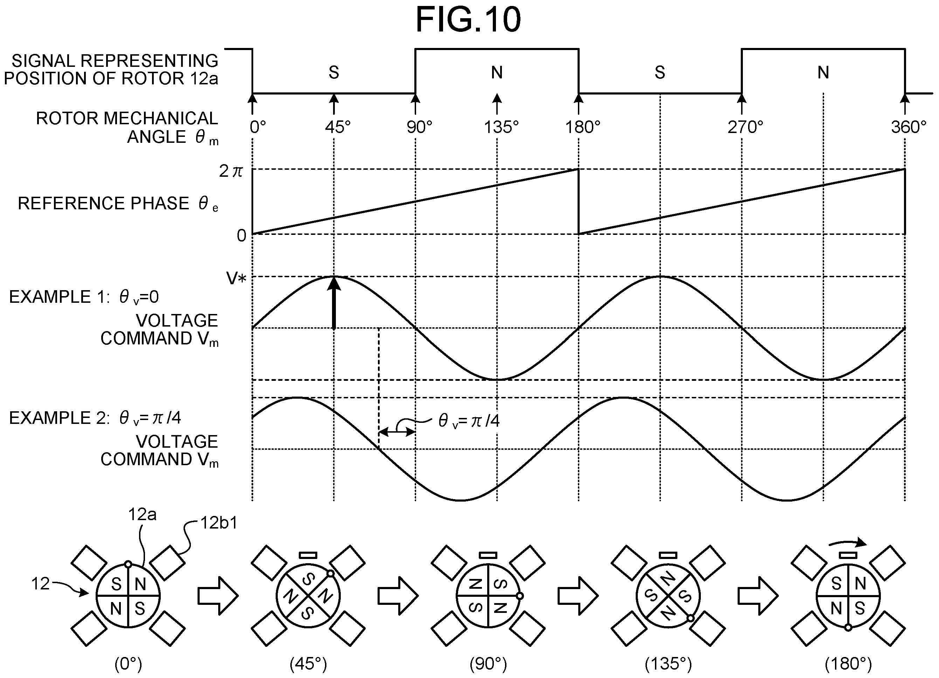

Next, the lead angle control according to the present embodiment will be described with reference to FIGS. 8 to 10. FIG. 8 is a block diagram illustrating a functional configuration for calculating the lead angle phase θᵥ that is input to the carrier comparison unit 38A illustrated in FIG. 4 and the carrier comparison unit 38B illustrated in FIG. 6. FIG. 9 is a diagram illustrating an exemplary method for calculating the lead angle phase θᵥ according to an embodiment. FIG. 10 is a time chart used to explain the relationship between the voltage command Vₘ and the lead angle phase θᵥ illustrated in FIGS. 4 and 6.

As illustrated in FIG. 8, the function of calculating the lead angle phase θᵥ can be implemented by the rotation speed calculation unit 42 and the lead angle phase calculation unit 44. The rotation speed calculation unit 42 calculates a rotation speed ω of the single-phase motor 12 on the basis of the current signal Ima detected by the current detection unit 22. The rotation speed calculation unit 42 also calculates the rotor mechanical angle θₘ, which is the angle from the reference position of the rotor 12a, on the basis of the current signal Ima, and calculates the reference phase θₑ by converting the rotor mechanical angle θₘ into an electric angle.

The uppermost part of FIG. 10 represents the position of the rotor 12a by signal level. The waveform of the uppermost part of FIG. 10 has an edge where the signal falls from "H" to "L", and this edge is the reference position of the rotor 12a. This reference position is set to "0°" of the rotor mechanical angle θₘ. Below the series of numerical values representing the rotor mechanical angle θₘ is the reference phase θₑ, which is the phase obtained by converting the rotor mechanical angle θₘ into an electric angle. The lead angle phase calculation unit 44 calculates the lead angle phase θᵥ on the basis of the rotation speed ω and the reference phase θₑ calculated by the rotation speed calculation unit 42.

The horizontal axis of FIG. 9 represents a rotation speed N, and the vertical axis of FIG. 9 represents the lead angle phase θᵥ. As illustrated in FIG. 9, the lead angle phase θᵥ can be determined by using a function in which the lead angle phase θᵥ increases as the rotation speed N increases. In the example of FIG. 9, the lead angle phase θᵥ is determined using a first-degree linear function, but a first-degree linear function is a non-limiting example. Any function other than a first-degree linear function may be used provided that the other function represents a relationship in which the lead angle phase θᵥ stays constant or increases as the rotation speed N increases.

The middle part of FIG. 10 depicts two examples of the waveform of the voltage command Vₘ as "Example 1" and "Example 2". The lowermost part of FIG. 10 depicts the rotor 12a that rotates clockwise by the rotor mechanical angles θₘ of 0°, 45°, 90°, 135°, and 180°. The rotor 12a of the single-phase motor 12 includes four magnets, and four teeth 12b1 are provided along the outer circumference of the rotor 12a. In the case where the rotor 12a rotates clockwise, the rotor mechanical angle θₘ is estimated on the basis of the current signal Ima, and the reference phase θₑ is calculated by converting the estimated rotor mechanical angle θₘ into an electric angle.

The voltage command Vₘ illustrated in the middle part of FIG. 10 as "Example 1" is the voltage command in the case of lead angle phase θᵥ=0. In the case of lead angle phase θᵥ=0, the voltage command Vₘ in phase with the reference phase θₑ is output. Note that the amplitude of the voltage command Vₘ at this time is determined on the basis of the voltage amplitude command V* described above.

The voltage command Vₘ illustrated in the middle part of FIG. 10 as "Example 2" is the voltage command in the case of lead angle phase θᵥ=π/4. In the case of lead angle phase θᵥ=π/4, the voltage command Vₘ having its phase leading the reference phase θₑ by π/4 is output. π/4 is a component of the lead angle phase θᵥ.

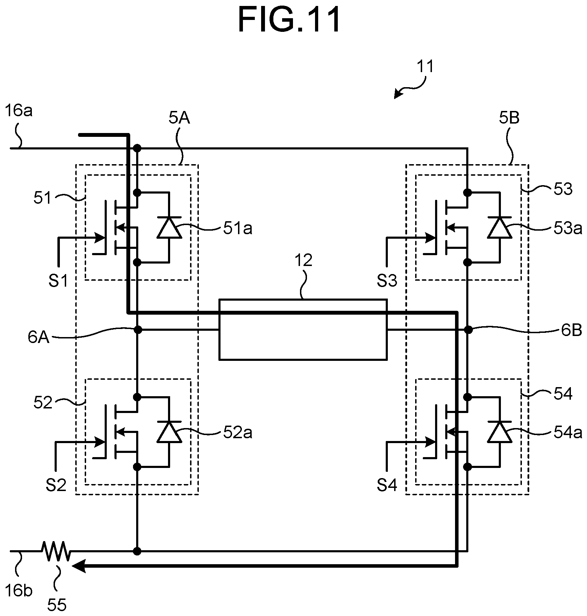

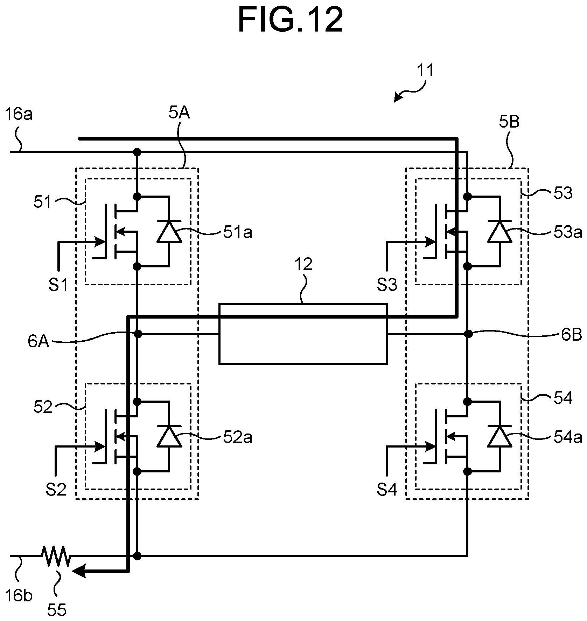

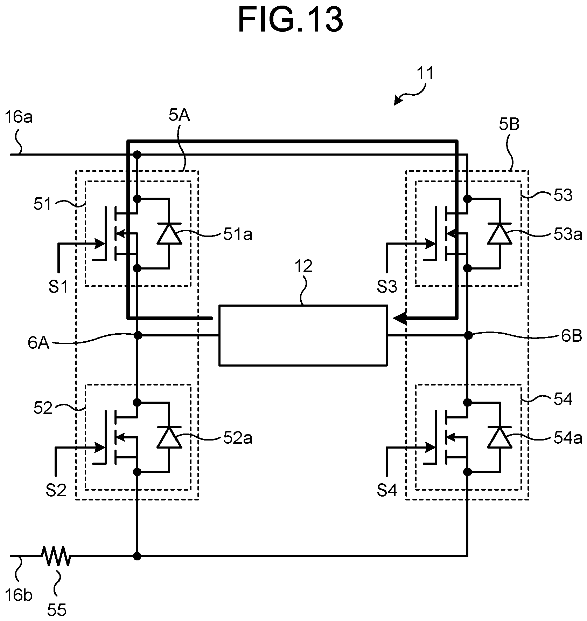

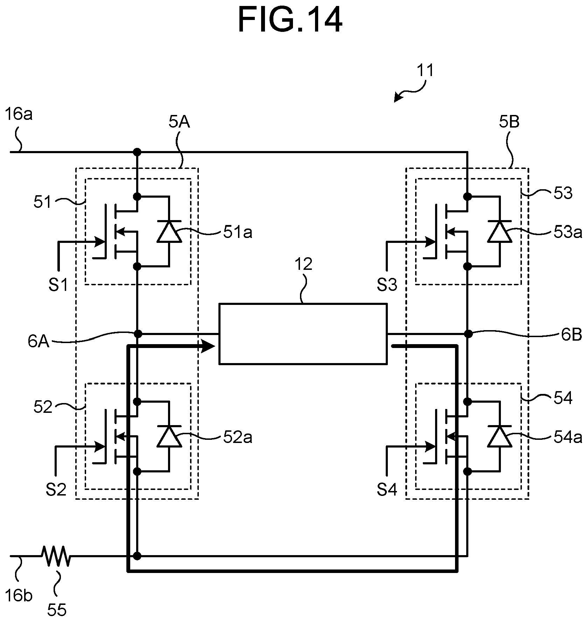

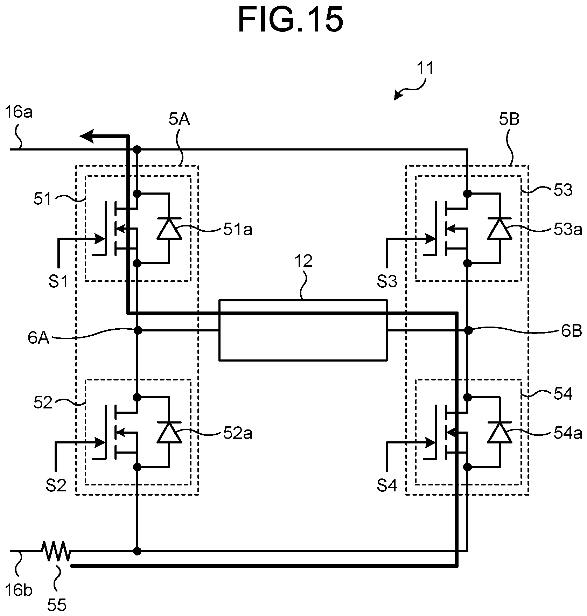

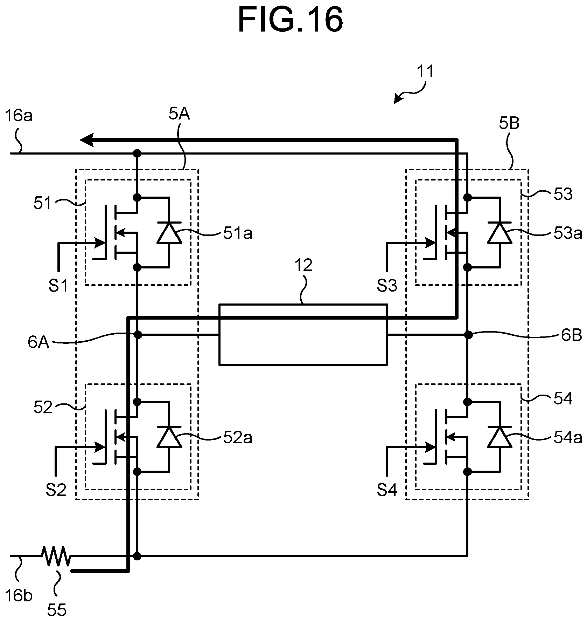

Next, the operation patterns of the inverter 11 will be described with reference to FIGS. 11 to 16. FIG. 11 is a diagram of FIG. 2 illustrating one of the current paths through which power is supplied from the battery 10 to the single-phase motor 12. FIG. 12 is a diagram of FIG. 2 illustrating another one of the current paths through which power is supplied from the battery 10 to the single-phase motor 12. FIG. 13 is a diagram of FIG. 2 illustrating one of the current paths for the flywheel operation of the inverter 11. FIG. 14 is a diagram of FIG. 2 illustrating another one of the current paths for the flywheel operation of the inverter 11. FIG. 15 is a diagram of FIG.2 illustrating one of the current paths through which the regenerative energy of the single-phase motor 12 is supplied to the battery 10. FIG. 16 is a diagram of FIG.2 illustrating another one of the current paths through which the regenerative energy of the single-phase motor 12 is supplied to the battery 10.

First, in FIG. 11, the switching elements 51 and 54 become conductive in response to the drive signals S1 and S4, and the current flows through the switching element 51, the single-phase motor 12, the switching element 54, and the shunt resistor 55 in this order. In FIG. 12, the switching elements 52 and 53 become conductive in response to the drive signals S2 and S3, and the current flows through the switching element 53, the single-phase motor 12, the switching element 52, and the shunt resistor 55 in this order. In either case, power is supplied from the battery 10 to the single-phase motor 12. In addition, in either case, the current flows through the shunt resistor 55.

Next, FIGS. 13 and 14 will be described. FIGS. 13 and 14 illustrate switching patterns in which the drive signals S1 and S3 or the drive signals S2 and S4 are on at the same time to cause freewheeling (also referred to as "flywheel"). In FIG. 13, the switching elements 51 and 53 become conductive in response to the drive signals S1 and S3, and the flywheel current flowing out of the single-phase motor 12 passes through the switching element 51 and the switching element 53 and returns to the single-phase motor 12. In FIG. 14, the switching elements 52 and 54 become conductive in response to the drive signals S2 and S4, and the flywheel current flowing out of the single-phase motor 12 passes through the switching element 54 and the switching element 52 and returns to the single-phase motor 12. What is characteristic of these operations is that neither the switching pattern of FIG. 13 nor the switching pattern of FIG. 14 allow flows of current through the shunt resistor 55.

Next, FIGS. 15 and 16 will be described. FIGS. 15 and 16 both illustrate operations in which the regenerative energy of the single-phase motor 12 is supplied to the battery 10. In FIG. 15, the switching elements 51 and 54 become conductive in response to the drive signals S1 and S4, and the regenerative current flowing out of the single-phase motor 12 passes through the switching element 51, the battery 10 (not illustrated in FIG. 15), the shunt resistor 55, and the switching element 54 and returns to the single-phase motor 12. In FIG. 16, the switching elements 52 and 53 become conductive in response to the drive signals S2 and S3, and the regenerative current flowing out of the single-phase motor 12 passes through the switching element 53, the battery 10 (not illustrated in FIG. 16), the shunt resistor 55, and the switching element 52 and returns to the single-phase motor 12. In either case, the current flows through the shunt resistor 55.

As is clear from the above description, the switching patterns other than the switching patterns of FIG. 13 and FIG. 14 allow the current to flow through the shunt resistor 55. That is, it can be seen that operating the inverter 11 such that the switching patterns illustrated in FIG. 13 and FIG. 14 do not occur enables the motor current Im to be detected in all time periods.

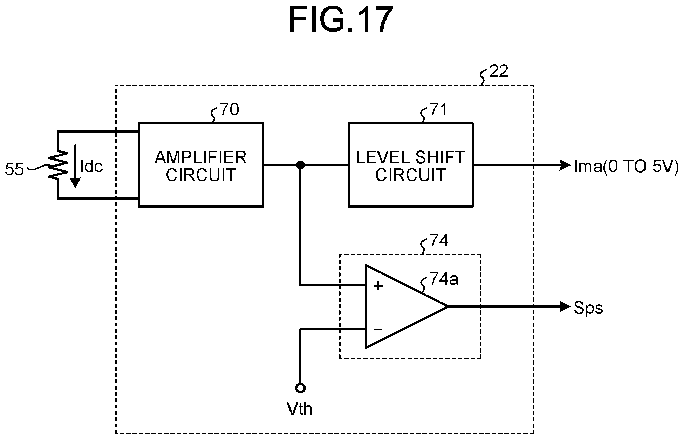

Next, the current detection unit according to the present embodiment will be described. FIG. 17 is a diagram illustrating an exemplary configuration of the current detection unit 22 illustrated in FIG. 1. In FIG. 17, the current detection unit 22 includes an amplifier circuit 70, a level shift circuit 71, and a protection unit 74. The protection unit 74 includes a comparator 74a. The protection unit 74 is a component that generates the protection signal Sps. That is, a protective function is added to the current detection unit 22 illustrated in FIG. 17.

The amplifier circuit 70 amplifies the voltage across the shunt resistor 55 generated by a shunt current Idc flowing through the shunt resistor 55. The shunt resistor 55 is a detector that detects the shunt current Idc flowing through the shunt resistor 55. The output value of the shunt resistor 55 is a voltage value. That is, the shunt resistor 55 is a detector that detects a physical quantity corresponding to the shunt current Idc flowing through the shunt resistor 55. Because the shunt resistor 55 is disposed on the current path from the battery 10 to the single-phase motor 12, it is desirable that the shunt resistor 55 have a minute resistance value in view of loss and heat generation. When the shunt current Idc flows, thus, the voltage across the shunt resistor 55 has an extremely low value. For this reason, a configuration including the amplifier circuit 70 is desirable, such as the one illustrated in FIG. 17.

The level shift circuit 71 shifts the output level of the amplifier circuit 70 to a level at which the output signal of the level shift circuit 71 can be input to the processor 31.

A typical example of the processor 31 is a microcontroller. Microcontrollers are generally designed to detect a positive voltage of about 0 to 5 V, and do not support negative voltages up to 5 V. As illustrated in FIGS. 11, 12, 15, and 16, the direction of the current flowing through the shunt resistor 55 changes. As a result, a negative voltage may be generated depending on the polarity of the current. Therefore, for example, in a case where the maximum value of the output voltage of the microcontroller is 5 V, an offset of about 2.5 V is provided to set the zero point. Then, the range of 0 to 2.5 V is defined as negative voltage, and the range of 2.5 V to 5 V is defined as positive voltage. This function is implemented by the level shift circuit 71. The level shift circuit 71 enables input to the AD input terminal (not illustrated) of the processor 31. In addition, the processor 31 can detect positive and negative currents by converting the output of the level shift circuit 71, which is a voltage value, into a current value. Note that the range of 0 to 2.5 V may be defined as positive voltage, the range of 2.5 V to 5 V may be defined as negative voltage, and the processor 31 may perform positive-negative inversion processing.

The protection unit 74 generates and outputs the protection signal Sps on the basis of the amplified signal obtained through amplification by the amplifier circuit 70. Specifically, the comparator 74a of the protection unit 74 compares the level of the amplified signal output from the amplifier circuit 70 with a protection threshold Vth, and, when the level of the amplified signal is higher than the protection threshold Vth, generates the protection signal Sps. The protection signal Sps is input to the processor 31. Upon receiving the protection signal Sps, the processor 31 stops generating each PWM signal for driving the corresponding switching element of the inverter 11, in order to protect the inverter 11.

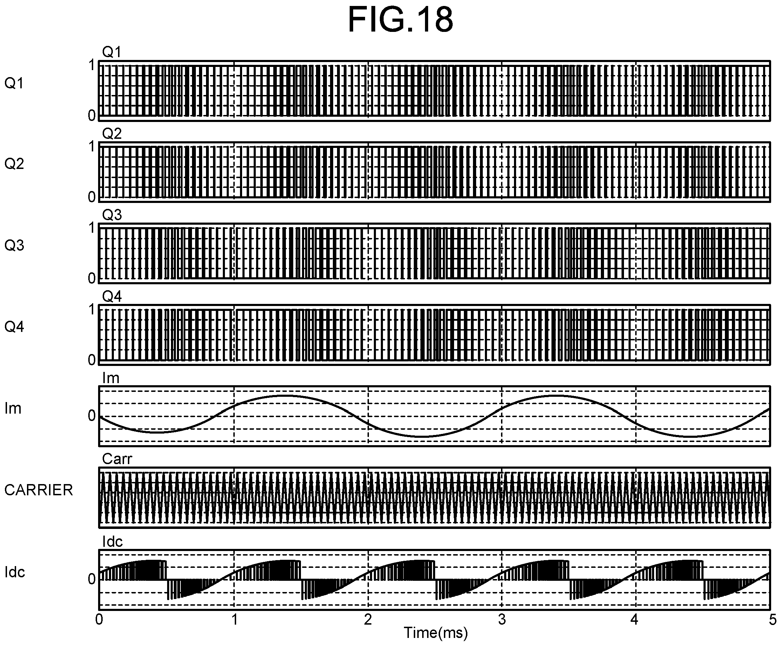

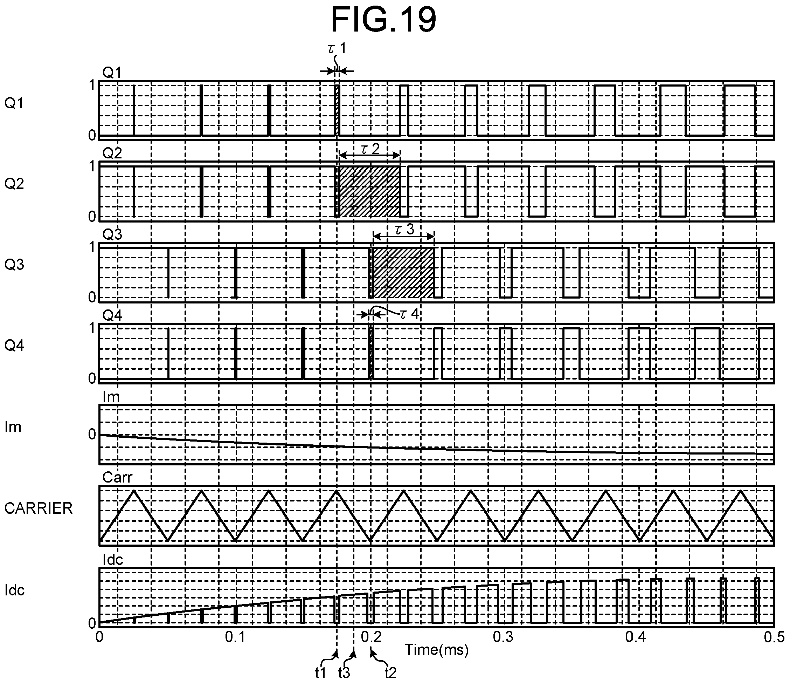

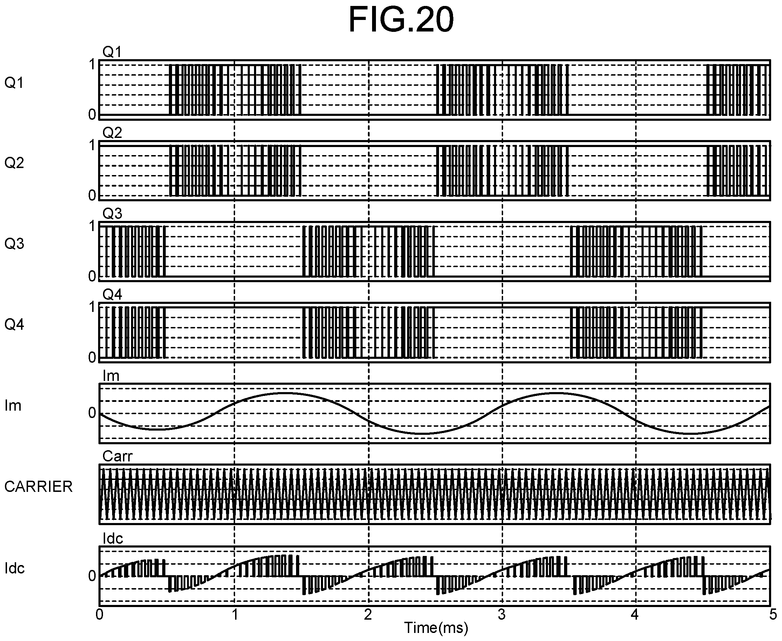

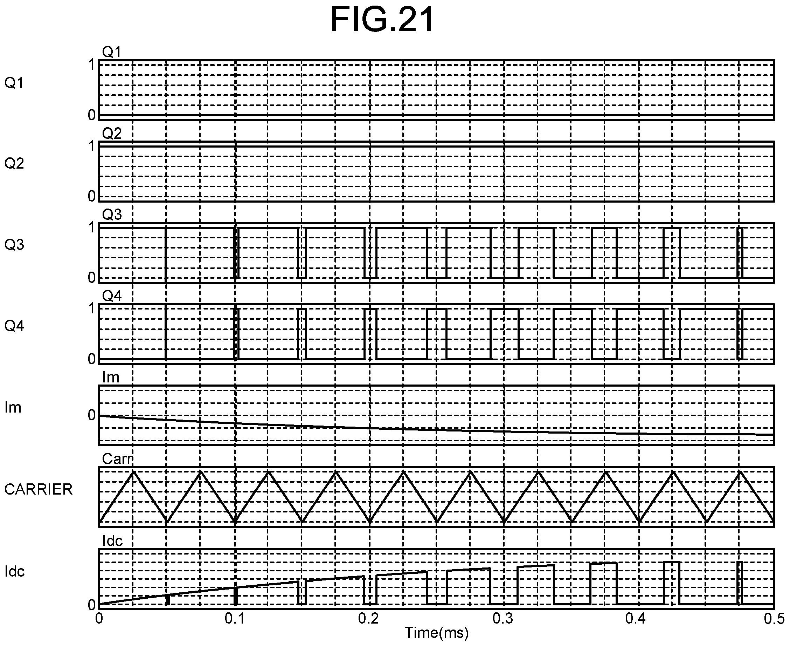

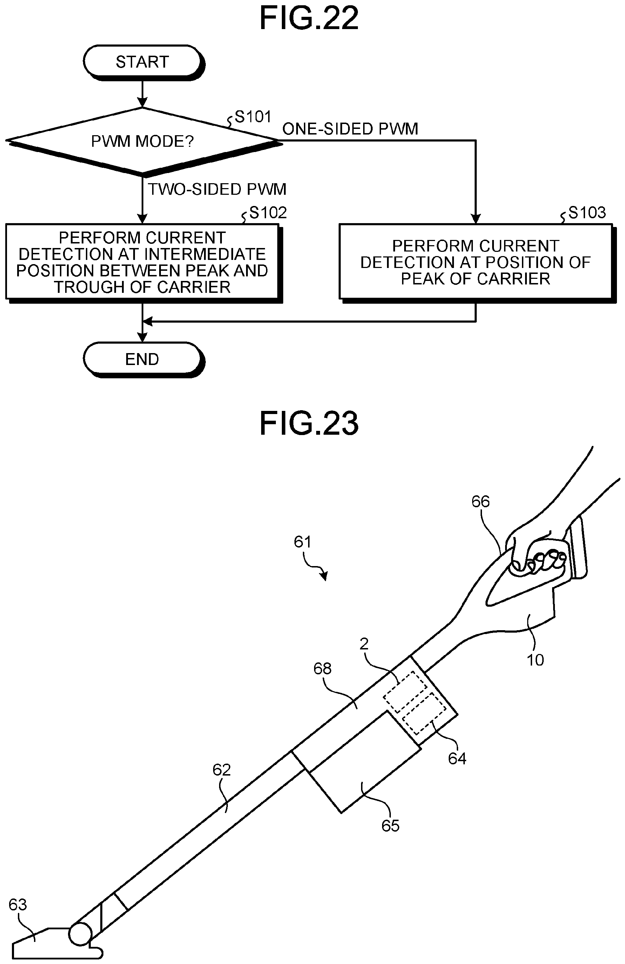

Next, the timing control for current detection according to the present embodiment will be described with reference to FIGS. 18 to 22. FIG. 18 is a diagram illustrating various waveforms in the two-sided PWM mode used for explaining operation according to an embodiment. FIG. 19 is a partially enlarged diagram of the waveforms illustrated in FIG. 18. FIG. 20 is a diagram illustrating various waveforms in the one-sided PWM mode used for explaining operation according to an embodiment. FIG. 21 is a partially enlarged diagram of the waveforms illustrated in FIG. 20. FIG. 22 is a flowchart illustrating a current detection switching operation according to an embodiment.

First, the waveforms in the two-sided PWM mode will be described. The upper part of FIG. 18 depicts examples of the waveforms of the PWM signals Q1 to Q4 in the case where the inverter 11 is operated in the two-sided PWM mode. The lower part of FIG. 18 depicts the waveform of the motor current Im that flows when the inverter 11 is operated by the PWM signals Q1 to Q4 illustrated in the upper part, the waveform of the carrier used to generate the PWM signals Q1 to Q4, and the waveform of the shunt current Idc that flows when the inverter 11 is operated by the PWM signals Q1 to Q4 illustrated in the upper part. For convenience, the waveform of the shunt current Idc indicates the potential difference generated by the current flowing through the shunt resistor 55. FIG. 19 depicts the waveforms expanded in the time axis direction over the time period from 0.0 [ms] to 0.5 [ms] on the horizontal axis of FIG. 18.

Referring now to the waveforms of FIG. 19, it can be seen that the shunt current flows, for example, between time point t1 at which the carrier has a peak (also called a "top") and time point t2 at which the carrier has a trough (also called a "bottom"). From this, it can also be seen that time point t3, which is intermediate between time point t1 and time point t2, is the time point when the current can be reliably detected.

In addition, the timing of current flow can also be explained focusing on the pair of the PWM signals Q1 and Q4 and the pair of the PWM signals Q2 and Q3, among the PWM signals Q1 to Q4. The PWM signals Q1 and Q4 are PWM signals for the switching elements 51 and 54 located on one diagonal, and the PWM signals Q2 and Q3 are PWM signals for the switching elements 52 and 53 located on the other diagonal. Below is a detailed description thereof.

In FIG. 19, first, use the PWM signal Q1 as a reference signal and focus on the PWM signals Q2 to Q4 output immediately after the reference signal. Note that the involved parts of the PWM signals Q1 to Q4 are hatched. In FIG. 19, for example, a time period in which the level of the PWM signal Q1 is "1" is a time (hereinafter referred to as an "on-time") in which the switching element 51 is on, and this time is denoted by "τ1". The corresponding times of the PWM signals Q2 to Q4 are similarly denoted by "τ2", "τ3", and "τ4", respectively.

Next, among the PWM signals Q1 to Q4, focus on the total value (τ1+τ4) of the on-times of the pair of the PWM signals Q1 and Q4, which are PWM signals for the switching elements 51 and 54 located on one diagonal and the total value (τ1+τ4) of the on-times of the pair of the PWM signals Q2 and Q3, which are PWM signals for the switching elements 52 and 53 located on the other diagonal. Then, there is a relationship of (τ1+τ4)<(τ2+τ3) between the total value (τ1+τ4) and the total value (τ2+τ3). It can be seen in the example of FIG. 19 that the current flows between time point t1 when the switching element 51 is turned on and time point t2 when the switching element 54 is turned on. That is, the current flows within the time period between the timing at which one switching element 51 of the pair having a smaller one of the total value (τ1+τ4) and the total value (τ2+τ3) is turned on and the timing at which the other switching element 54 of that pair is turned on. Although FIG. 19 describes the case of (τ1+τ4)<(τ2+τ3), a similar relationship holds true in the case of (τ1+τ4)>(τ2+τ3). Specifically, in the case of (τ1+τ4)>(τ2+τ3), the current flows within the time period between the timing at which one switching element 52 is turned on and the timing at which the other switching element 53 is turned on.

From the above, it can be seen that the timing at which the motor current Im can be detected by the shunt resistor 55 in the two-sided PWM mode coincides with the timing of switching of the operation of the switching elements 51 to 54. Because the timing of switching of the operation of the switching elements 51 to 54 is managed by the control unit 25, it is possible to reliably acquire a detected value of current by performing AD conversion in synchronization with the on or off timing of the switching elements 51 to 54.

If an inexpensive microcontroller is used, it may be difficult to control the AD conversion timing. In particular, in a case where the AD conversion timing is controlled taking account of the on or off timing of the switching elements 51 to 54 according to the PWM operation mode, the current can be accurately detected but only at irregular intervals. For this reason, processing such as phase correction is required and the processing load increases accordingly, which leads to the need for an expensive microcontroller. On the other hand, in the case of using the detection method according to the present embodiment, AD conversion is performed at an intermediate position between the peak and the trough of the carrier located in the middle of the time period in which the current is reliably flowing. Therefore, processing such as phase correction is not required, and as a result current detection can be easily performed without complicated control. Thus, a relatively inexpensive microcontroller can be used.

Further, because it is possible to perform AD conversion twice in one carrier period, it is possible to sample the motor current at a frequency twice the carrier frequency. This can contribute to improving the accuracy of control. For the PWM signals Q1 to Q4, a short-circuit prevention time called a dead time is generally provided in order to prevent the switching elements connected in series from being short-circuited. The short-circuit prevention time causes the PWM signals Q1 to Q4 to be output at a timing shifting the on or off timing on the order of several microseconds. In practice, therefore, it is desirable to detect the shunt current taking the short-circuit prevention time into consideration.

Next, the waveforms in the one-sided PWM mode will be described. The upper part of FIG. 20 depicts examples of the waveforms of the PWM signals Q1 to Q4 in the case where the inverter 11 is operated in the one-sided PWM mode. The lower part of FIG. 20 depicts the waveform of the motor current Im that flows when the inverter 11 is operated by the PWM signals Q1 to Q4 illustrated in the upper part, the waveform of the carrier used to generate the PWM signals Q1 to Q4, and the waveform of the shunt current Idc that flows when the inverter 11 is operated by the PWM signals Q1 to Q4 illustrated in the upper part. For convenience, the waveform of the shunt current Idc indicates the potential difference generated by the current flowing through the shunt resistor 55. FIG. 21 depicts the waveforms expanded in the time axis direction over the time period from 0.0 [ms] to 0.5 [ms] on the horizontal axis of FIG. 20.

Referring now to the waveforms of FIG. 21, it can be seen that the shunt current Idc flows at the peaks of the carrier.

In addition, the timing of current flow can be explained focusing on the pair of the switching elements 51 and 54 located on one diagonal and the pair of the switching elements 52 and 53 located on the other diagonal. Specifically, it can be explained that the shunt current Idc flows during the time period in which the switching elements 51 and 54 located on one diagonal are both off, or during the time period in which the switching elements 52 and 53 located on the other diagonal are both on.

From the above, it can be seen that the timing at which the motor current Im can be detected by the shunt resistor 55 in the one-sided PWM mode coincides with the timing of switching of the operation of the switching elements 51 to 54. Because the timing of switching of the operation of the switching elements 51 to 54 is managed by the control unit 25, it is possible to reliably acquire a detected value of current by performing AD conversion in synchronization with the on or off timing of the switching elements 51 to 54.

If an inexpensive microcontroller is used, it may be difficult to control the AD conversion timing. In particular, in a case where the AD conversion timing is controlled taking account of the on or off timing of the switching elements 51 to 54 according to the PWM operation mode, the current can be accurately detected but only at irregular intervals. For this reason, processing such as phase correction is required and the processing load increases accordingly, which leads to the need for an expensive microcontroller. On the other hand, in the case of using the detection method according to the present embodiment, AD conversion is performed at the position of the peak of the carrier, at which the current reliably flows. Therefore, processing such as phase correction is not required, and as a result current detection can be easily performed without complicated control. Thus, a relatively inexpensive microcontroller can be used.

Although the foregoing describes that the shunt current Idc flows at the position of the peak of the carrier, the PWM signals Q1 to Q4 may be inverted and output, depending on the type of microcontroller. In this case, because the shunt current Idc flows at the trough of the carrier, it is desirable to check the specifications and set values of the microcontroller to set the AD conversion timing. In addition, as in the two-sided PWM mode, it is desirable to detect the shunt current taking the short-circuit prevention time into consideration.

FIG. 22 is a flowchart illustrating a current detection switching operation according to an embodiment. The operation of the flowchart of FIG. 22 is implemented by the control unit 25. The control unit 25 determines the designated operation mode on the basis of the input operation mode signal Sms (step S101). When the two-sided PWM mode is designated, the control unit 25 determines to perform current detection at an intermediate position between the peak and the trough of the carrier (step S102), and ends the procedure of FIG. 22. When the one-sided PWM mode is designated, the control unit 25 determines to perform current detection at the position of the peak of the carrier (step S103), and ends the procedure of FIG. 22. Needless to say, the flowchart of FIG. 22 is executed every time the operation mode signal Sms is changed. In addition, in the case of applications or product specifications in which the operation mode is changed relatively frequently, it is desirable to always activate the process of step S101.

As described above, in the motor driving apparatus according to an embodiment, in a case of using the two-sided PWM mode, the switching elements 51 to 54 are controlled such that current flows through the shunt resistor 55 within a time period between a first timing at which one switching element of a pair of switching elements is turned on and a second timing at which the other switching element of that pair is turned on, the pair having a smaller one of a total value of individual on-times of a pair of the switching elements 51 and 54 and a total value of individual on-times of a pair of the switching elements 52 and 53. This makes it possible to easily perform timing control for current detection without complication.

In addition, in the motor driving apparatus according to an embodiment, in a case of using the one-sided PWM mode, the switching elements 51 to 54 are controlled such that current flows through the shunt resistor 55 within a time period in which two switching elements of either a pair of the switching elements 51 and 54 or a pair of the switching elements 52 and 53 are both off or within a time period in which the two switching elements are both on. This makes it possible to easily perform timing control for current detection without complication.

In addition, switching the current detection timing according to the PWM operation mode as in the flowchart of FIG. 22 makes it possible to perform AD conversion at a fixed timing even in the case of detection that uses a single shunt resistor. This eliminates the need to adjust the detection timing, so that current detection can be easily and reliably performed even using an inexpensive microcontroller.

Next, examples of application of the motor driving apparatus according to an embodiment will be described. FIG. 23 is a diagram illustrating the configuration of a vacuum cleaner 61 including the motor driving apparatus 2 according to an embodiment. The vacuum cleaner 61 includes the battery 10 illustrated in FIG. 1, the motor driving apparatus 2 illustrated in FIG. 1, an electric blower 64 that is driven by the single-phase motor 12 illustrated in FIG. 1, a dust collection chamber 65, a sensor 68, a suction port 63, an extension pipe 62, and an operation unit 66.

A user who uses the vacuum cleaner 61 holds the operation unit 66 to operate the vacuum cleaner 61. The motor driving apparatus 2 of the vacuum cleaner 61 drives the electric blower 64 using the battery 10 as a power supply. As the electric blower 64 is driven, dust is sucked through the suction port 63. The sucked dust is collected in the dust collection chamber 65 via the extension pipe 62.

The vacuum cleaner 61 is a product having the single-phase motor 12 rotating at a speed fluctuating from 0 [rpm] to over 100,000 [rpm]. Driving such a product having the single-phase motor 12 rotating at a high speed requires a high carrier frequency. For this reason, the conventional current detection method encounters difficulty in adjusting the A/D conversion timing, and the switching time is shortened, making the detection more difficult. Thus, the control method according to the above-described embodiment is suitable.

In addition, when the voltage based on a voltage command is output to the single-phase motor 12, the control unit 25 suspends the switching operation of the first switching element of the upper arm and the second switching element of the lower arm in one half of the period of the voltage command, and suspends the switching operation of the third switching element of the upper arm and the fourth switching element of the lower arm in the other half of the period of the voltage command. This prevents an increase in switching loss, thereby making it possible to provide the efficient vacuum cleaner 61.

Moreover, the vacuum cleaner 61 according to an embodiment can be reduced in size and weight due to the simplified heat dissipation component described above. Further, because the vacuum cleaner 61 requires neither a current sensor for current detection nor a high-speed analog-to-digital converter, it is possible to provide the vacuum cleaner 61 in a manner that prevents an increase in design cost and manufacturing cost.

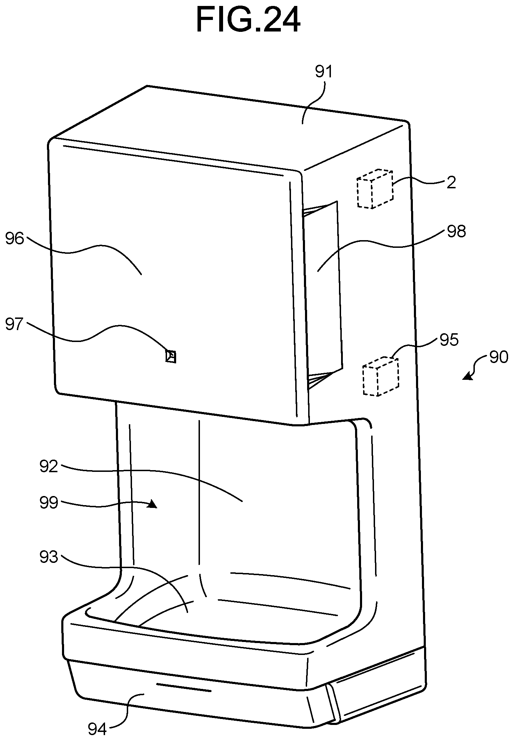

FIG. 24 is a diagram illustrating the configuration of a hand drying machine including the motor driving apparatus according to an embodiment. The hand drying machine 90 includes the motor driving apparatus 2, a casing 91, a hand detection sensor 92, a water tray 93, a drain container 94, a cover 96, a sensor 97, an intake port 98, and an electric blower 95. The sensor 97 is either a gyro sensor or a motion sensor. In the hand drying machine 90, a hand is inserted into a hand insertion portion 99 above the water tray 93, and the water is blown off by air from the electric blower 95. The blown water is collected in the water tray 93, and thereafter stored in the drain container 94.

Similarly to the vacuum cleaner 61 illustrated in FIG. 23, the hand drying machine 90 is a product that provides the motor rotation speed fluctuating from 0 [rpm] to over 100,000 [rpm]. The control method according to the above-described embodiment is therefore, also suitable for the hand drying machine 90, and an effect similar to that of the vacuum cleaner 61 can be obtained.

As described above, the present embodiment has provided the exemplary configurations in which the motor driving apparatus 2 is applied to the vacuum cleaner 61 and the hand drying machine 90, but the present invention is not limited to these examples. The motor driving apparatus 2 can be applied to a wide variety of electrical devices equipped with a motor. Examples of electrical devices equipped with a motor include incinerators, crushers, drying machines, dust collectors, printing machines, cleaning machines, confectionery machines, tea making machines, woodworking machines, plastic extruders, cardboard machines, packaging machines, hot air generators, OA equipment, and electric blowers. An electric blower is a blower means for object transportation, dust attraction, or general-purpose blowing and exhausting.

Note that the configurations described in the above-mentioned embodiment indicate examples of the contents of the present invention. The configurations can be combined with another well-known technique, and some of the configurations can be omitted or changed in a range not departing from the gist of the present invention.

### Reference Signs List

1 motor driving system; 2 motor driving apparatus; 5A, 5B leg; 6A, 6B connection point; 10 battery; 11 inverter; 12 single-phase motor; 12a rotor; 12b stator; 12b1 teeth; 20 voltage sensor; 22 current detection unit; 25 control unit; 31 processor; 32 drive signal generation unit; 33 carrier generation unit; 34 memory; 38, 38A, 38B carrier comparison unit; 38a absolute value computation unit; 38b division unit; 38c, 38d, 38f, 38k multiplication unit; 38e, 38m, 38n addition unit; 38g, 38h comparison unit; 38i, 38j output inversion unit; 42 rotation speed calculation unit; 44 lead angle phase calculation unit; 51, 52, 53, 54 switching element; 51a, 52a, 53a, 54a body diode; 55 shunt resistor; 61 vacuum cleaner; 62 extension pipe; 63 suction port; 64 electric blower; 65 dust collection chamber; 66 operation unit; 68 sensor; 70 amplifier circuit; 74 protection unit; 74a comparator; 90 hand drying machine; 91 casing; 92 hand detection sensor; 93 water tray; 94 drain container; 95 electric blower; 96 cover; 97 sensor; 98 intake port; 99 hand insertion portion.

## Claims

1. A motor driving apparatus comprising:
an inverter comprising a first leg and a second leg connected in parallel to a direct-current power supply, the first leg comprising a first switching element of an upper arm and a second switching element of a lower arm connected in series to each other, the second leg comprising a third switching element of the upper arm and a fourth switching element of the lower arm connected in series to each other, and the inverter converting a direct-current power supplied from the direct-current power supply, into an alternating-current power and supplying the alternating-current power to a single-phase motor;
a current detector disposed on a path between the inverter and the direct-current power supply; and
a control unit controlling, in a case of using a two-sided pulse width modulation mode, the first to fourth switching elements such that current flows through the current detector within a time period between a first timing at which one switching element of a pair of switching elements is turned on and a second timing at which the other switching element of the pair is turned on, the pair of switching elements having a smaller one of a total value of individual on-times of a pair of the first switching element and the fourth switching element and a total value of individual on-times of a pair of the second switching element and the third switching element.

2. The motor driving apparatus according to claim 1, wherein
the control unit generates a pulse width modulation signal, using a carrier, and detects a physical quantity output by the current detector at an intermediate position between peak or trough positions of the carrier.

3. The motor driving apparatus according to claim 1 or 2, wherein
when operating in a one-sided pulse width modulation mode, the control unit switches an operation mode to the two-sided pulse width modulation mode on a basis of an instruction.

4. A motor driving apparatus comprising:
an inverter comprising a first leg and a second leg connected in parallel to a direct-current power supply, the first leg comprising a first switching element of an upper arm and a second switching element of a lower arm connected in series to each other, the second leg comprising a third switching element of the upper arm and a fourth switching element of the lower arm connected in series to each other, and the inverter converting a direct-current power supplied from the direct-current power supply, into an alternating-current power and supplying the alternating-current power to a single-phase motor;
a current detector disposed on a current path between the inverter and the direct-current power supply; and
a control unit controlling, in a case of using a one-sided pulse width modulation mode, the first to fourth switching elements such that current flows through the current detector within a time period in which two switching elements of either a pair of the first and fourth switching elements or a pair of the second and third switching elements are both off or within a time period in which the two switching elements are both on.

5. The motor driving apparatus according to claim 4,
wherein
the control unit generates a pulse width modulation signal, using a carrier, and detects a physical quantity output by the current detector at a peak or trough position of the carrier.

6. The motor driving apparatus according to claim 4 or 5, wherein
when operating in a two-sided pulse width modulation mode, the control unit switches an operation mode to the one-sided pulse width modulation mode on a basis of an instruction.

7. The motor driving apparatus according to any one of claims 1 to 6, wherein
the first to fourth switching elements are each formed of a wide bandgap semiconductor.

8. The motor driving apparatus according to claim 7, wherein
the wide bandgap semiconductor is silicon carbide, gallium nitride, or diamond.

9. A vacuum cleaner comprising the motor driving apparatus according to any one of claims 1 to 8.

10. A hand drying machine comprising the motor driving apparatus according to any one of claims 1 to 8.
